# EUROPEAN PATENT APPLICATION

(11) **EP 2 491 887 A1**
(43) Date of publication of application: **29.08.2012**
(21) Application number: 12001075.6
(22) Date of filing: 17.02.2012
(51) Int. Cl.: A61C 8/00

(54) **Dental implant abutment made of titanium**

(30) Priority: 23.02.2011 JP 2011036988
(71) Applicant: GC Corporation, Bunkyo-ku Tokyo 113-0033 (JP)
(72) Inventor: Takahashi, Akio, Tokyo (JP); Mashio, Go, Tokyo (JP); Yamamoto, Shogo, Tokyo (JP)
(74) Representative: Müller-Boré & Partner Patentanwälte

(57) **Abstract**

To provide a dental implant abutment (2) made of titanium, which is mounted on the intraoral side of a dental implant fixture (1) embedded in a jawbone and coming to be an artificial tooth root, penetrates through gingiva, and comes to be a base of an upper structure. The dental implant abutment made of titanium does not remarkably impair aesthetic property even when the intraoral portion of the dental implant abutment is seen through gingiva in a dental implant treatment as a treatment method to recover lost oral function of a lost tooth part. The dental implant abutment made of titanium is mounted on the intraoral side of a dental implant fixture being embedded in a jawbone and coming to be an artificial tooth root, penetrates through gingiva, and comes to be a base of an upper structure. The surface of the dental implant abutment made of titanium is colored to have the value of L* within a range from 40 to 44, the value of a* within a range from 21 to 40 and the value of b* within a range from -20 to 10, which are represented by L*a*b* color system.

## Description

The present invention relates to a dental implant abutment made of titanium which does not remarkably impair aesthetic property even when an intraoral portion of a dental implant abutment is seen through gingiva, in a dental implant treatment as a treatment method to recover lost oral function of a lost tooth part.

As a treatment method to recover lost oral function of a lost tooth part, a dental implant treatment has been widely used. The dental implant treatment is to fix a dental prosthesis on the intraoral side of a dental implant fixture. The dental implant fixture is embedded in a jawbone of the lost tooth part, is bonded to the jawbone, and comes to be an artificial tooth root. Conventionally, in the usual dental implant treatment, a dental implant abutment to penetrate through gingiva is disposed on the intraoral side of the dental implant fixture, and the dental prosthesis is disposed on the intraoral side of the dental implant abutment (for example, refer to Japanese Patent Application Laid-Open Nos. H07-80003 and 2003-325552, and US Patent No. 5674072).

However, in such a dental implant treatment, if a thickness of gingiva of a patient is thin, the dental implant abutment disposed on the intraoral side of the dental implant fixture may be seen through the gingiva after the dental implant treatment.

A conventional dental implant abutment is made of titanium or titanium alloy in view of biocompatibility and the like. Thus, when an intraoral side portion of the dental implant abutment is seen through gingiva, the portion is darkly seen by the titanium or titanium alloy having metallic color. So, there is a fault that aesthetic property is remarkably impaired.

Furthermore, since a dental CAD/CAM technique has been advanced in recent years, a method for producing the dental implant abutment, in which a block made of zirconia is cut out to form, has been widely used. However, although the method has excellent aesthetic property, a brittle material including ceramic as a main component is used, so that strength is low. Therefore, the method has a problem as well in long-term reliability of the dental implant abutment which has the danger of breaking.

To solve the aforementioned problems, the present applicant has proposed a dental implant abutment in which the color of a portion hiding in gingiva is red (for example, refer to Japanese Patent Application Laid-Open No. 2009-082171). However, the red-colored dental implant abutment shows unnatural dark red or black in many cases, so that the method is yet insufficient for having excellent aesthetic property.

Accordingly, an objective of the present invention is to provide a dental implant abutment made of titanium, which does not impair aesthetic property rather than a conventional dental implant abutment made of titanium even if a subgingival portion is seen through gingiva.

The present inventors carried our earnest works to solve the aforementioned problems and, as a result, they found the following to complete the present invention. That is, when a color tone of a dental implant abutment made of titanium, which is represented by L*a*b* color system, is made to have a value of L* within a range from 40 to 44, a value of a* within a range from 21 to 40, and a value of b* within a range from -20 to 10, a reflected light from the implant abutment sharpens gingiva. As a result, aesthetic property is not remarkably impaired as compared with the conventional implant abutment made of titanium.

According to an aspect of the present invention, a dental implant abutment made of titanium is mounted on the intraoral side of a dental implant fixture, which is embedded in a jawbone and comes to be an artificial tooth root, penetrates through gingiva, and comes to be a base of an upper structure. Since the surface of the dental implant abutment made of titanium is colored to have the values of L*, a* and b* within specific ranges represented by L*a*b* color system, a reflected light from the abutment, which is incident to an oral cavity, sharpens the gingiva.

Namely, the ranges of L*, a* and b* represented by L*a*b* color system mean the color having a value of L* within a range from 40 to 44, a value of a* within a range from 21 to 40, and a value of b* within a range from -20 to 10.

A dental implant abutment made of titanium according to the present invention is a dental implant abutment made of titanium which does not impair aesthetic property rather than a conventional dental implant abutment made of titanium even if a subgingival portion is seen through gingiva.
Fig. 1 is a perspective view of one example of a dental implant abutment made of titanium according to the present invention.
Fig. 2 is a longitudinal cross-sectional view illustrating a state after completing a dental implant treatment using the dental implant abutment illustrated in Fig. 1.
Fig. 3 is a perspective view of another example of a dental implant abutment made of titanium according to the present invention.
Fig. 4 is a longitudinal cross-sectional view illustrating a state after completing a dental implant treatment using the dental implant abutment illustrated in Fig. 3.
Fig. 5 is a perspective view of other example of a dental implant abutment made of titanium according to the present invention.
Fig. 6 is a perspective view of other example of a dental implant abutment made of titanium according to the present invention.
Fig. 7 is a perspective view of other example of a dental implant abutment made of titanium according to the present invention.

According to an aspect of a dental implant abutment made of titanium of the present invention, the surface color tone has a value of L* within a range from 40 to 44, a value of a* within a range from 21 to 40, and a value of b* within a range from -20 to 10 represented by L*a*b* color system.

Namely, the L*a*b* color system is to analyze the color tone with three factors of L* showing lightness (brightness), a* showing hue (the degree of red and green), and b* showing chroma (the degree of yellow and blue), and to express the color tone with three values of L*, a*, and b*. It is necessary that the value of L* showing lightness (brightness) is 40 to 44. A reason of this is that if the value of L* is less than 40, the abutment itself is too dark. As a result, when the gingiva is irradiated by the reflected light, the gingiva looks black, so that it is not preferable. If the value of L* is more than 44, the abutment is too light conversely. As a result, the gingiva looks unnaturally, so that it is not preferable. Particularly, it is more preferable that the value of L* is 41 to 43.5.

Further, it is necessary that the value of a* showing hue (the degree of red and green) is 21 to 40. A reason of this is that if the value of a* is less than 21, green is too strong. As a result, when the gingiva is irradiated by the reflected light, the gingiva looks black, so that it is not preferable. If the value of a* is more than 40, redness is too strong. As a result, the gingiva looks rather unnaturally, so that it is not preferable. Particularly, it is more preferable that the value of a* is 21 to 37.

Furthermore, it is necessary that the value of b* showing chroma (the degree of yellow and blue) is -20 to 10. A reason of this is that if the value of b* is less than -20, yellow is too weak, so that the effect of object of the present invention is hardly obtained. If the value of b* is more than 10, yellow is too strong. As a result, when gingiva is irradiated by the reflected light, the gingiva looks rather unhealthy, so that it is not preferable. Particularly, it is preferable that the value of b* is -16 to 10.

As a method for coloring the titanium surface of the dental implant abutment made of titanium according to the present invention, conventionally known coloring methods such as anodic oxidation treatment, nitriding treatment, and the like can be used. In addition, since a colored layer formed by such coloring methods for the surface of the dental implant abutment made of titanium is thin, processing the surface after the coloring treatment is not preferable.

The dental implant abutment made of titanium according to the present invention will be described in detail below with reference to the drawings.

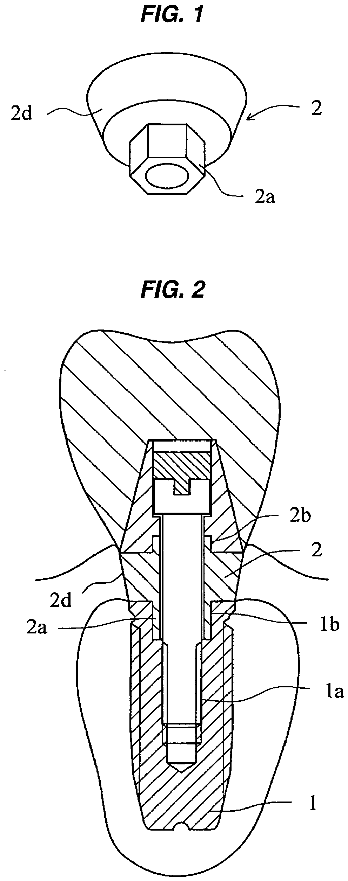

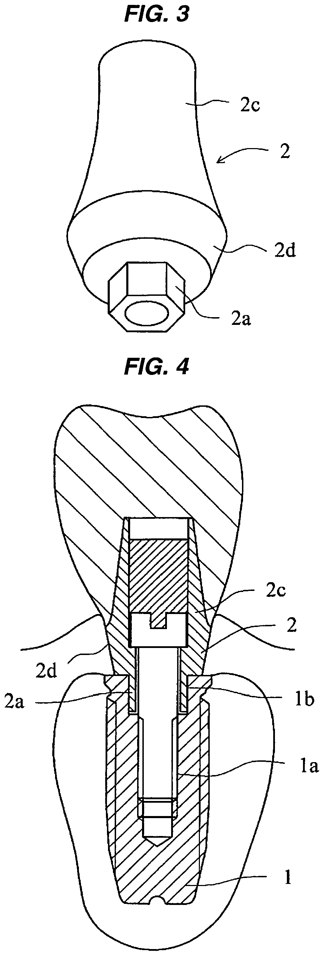

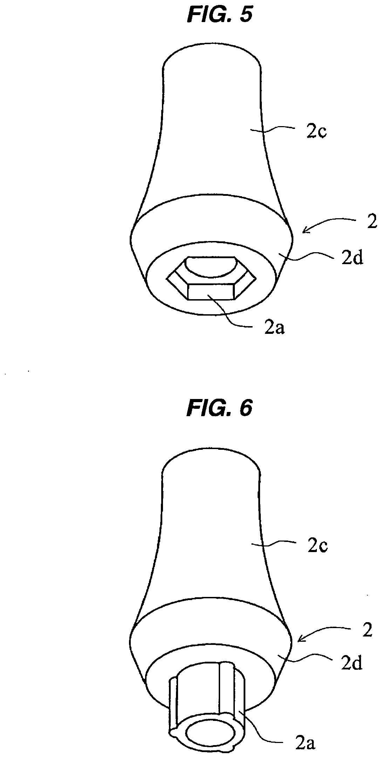

In the drawings, a dental implant fixture 1 is embedded in a jawbone of a lost tooth part, is bonded to the jawbone, and comes to be an artificial tooth root, in the dental implant treatment to recover the lost oral function of a lost tooth part. The dental implant fixture 1 has an approximately pillar shape as shown in Japanese Patent Application Laid-Open No. H7-80003, or has an approximately pillar shape and a male screw screwed on the outer periphery of the pillar as shown in Japanese Patent Application Laid-Open No. 2003-325552. The dental implant fixture 1 has a female screw 1 a screwed in the axial direction of a center thereof. The dental implant fixture 1 has, on the intraoral side thereof, an engagement part 1b for engaging a dental implant abutment 2 made of titanium according to the present invention, which will be described below, so as not to rotate the dental implant abutment 2. When an engagement part 2a provided on the side of the dental implant fixture 1 of the dental implant abutment 2 has a prismatic shape such as hexagon or the like as illustrated in Figs. 1 and 3, the engagement part 1 b has, in a transverse section thereof, a concave part having a shape fitting to the prismatic shape. When the engagement part 2a provided on the side of the dental implant fixture 1 of the dental implant abutment 2 has, in a transverse section thereof, an angular concave part of hexagon or the like as illustrated in Fig. 5, the engagement part 1b has a pillar shape fitting to the angular shape. Further, when the engagement part 2a provided on the side of the dental implant fixture 1 of the dental implant abutment 2 has protrusions on an outer periphery of a pillar shape at specific intervals as illustrated in Fig. 6, the engagement part 1 b has a transverse section having recessions on an outer periphery of a round shape at specific intervals. Furthermore, when the engagement part 1b has a pillar shape, a through hole communicating to the female screw 1 a is formed at the engagement part 1 b.

A dental implant abutment made of titanium 2 according to the present invention is mounted on the intraoral side of the dental implant fixture 1 embedded in a jawbone and coming to be an artificial tooth root. The dental implant abutment penetrates gingiva, and comes to be a base of an upper structure. The surface color tone of the dental implant abutment, which is represented by L*a*b* color system, has a vale of L* within a range from 40 to 44, a value of a* within a range from 21 to 40, and a value of b* within a range from -20 to 10. More particularly, the surface of the dental implant abutment is colored by the coloring method such as anodic oxidation treatment, nitriding treatment, or the like so as to have a color with the value of L* within a range from 40 to 44, the value of a* within a range from 21 to 40, and the value of b* within a range from -20 to 10 represented by L*a*b* color system.

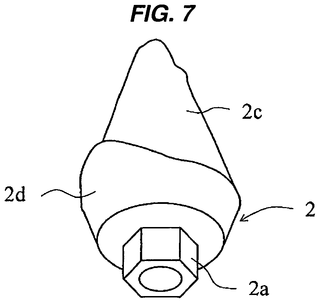

As for the dental implant abutment made of titanium 2 according to the present invention, the following embodiments can be used. In an embodiment, an engagement part 2a is provided on the side opposite to the intraoral side to engage with the engagement part 1b provided on the intraoral side of the dental implant fixture 1. The engagement part 2a has a shape, which includes a prismatic shape such as hexagon, or the like as illustrated in Figs. 1 and 3, includes a transverse section having a concave part with an angular shape such as hexagon, or the like as illustrated in Fig. 5, or includes protrusions on an outer periphery of a pillar shape at specific intervals as illustrated in Fig. 6. Further, in the embodiment, an intraoral side engagement part 2b is provided on the intraoral side and engaged with a prosthesis forming member so as not to rotate the prosthesis forming member, wherein the prosthesis forming member is made of a different member from the dental implant abutment 2, as illustrated in Figs. 1 and 2, and Japanese Patent Application Laid-Open No. H07-80003. In another embodiment, a prosthesis fixing portion 2c having an approximately truncated-conical outer surface shape is formed integrally on the intraoral side of a portion penetrating gingiva as illustrated in Figs. 4, 5 and 6 and Japanese Patent Application Laid-Open No. 2003-325552. In other embodiment, a prosthesis fixing portion 2c having a shape fitting to the shape of a dental prosthesis to be formed is integrally formed as illustrated in Fig. 7. Further, as for a portion 2d hiding in gingiva, when the dental implant abutment made of titanium 2 is mounted on the dental implant fixture 1 by engaging the engagement part 2a with the intraoral side of the dental implant fixture 1, the portion 2d can have a shape expanding to the intraoral side from an outer face on the intraoral side of the dental implant fixture 1 as illustrated in Figs. 1 and 2 and Japanese Patent Application Laid-Open Nos. H7-80003 and 2003-325552. Further, the portion 2d can have a shape expanding to the intraoral side from the more inner side than an outer periphery of an end face on the intraoral side of the dental implant fixture 1 as illustrated in Fig. 4 and US Patent No. 5674072. Furthermore, the portion 2d can have a plane shape of an end part on the intraoral side expanding to the intraoral side from the intraoral side surface of the dental implant fixture 1. Furthermore, the portion 2d can have a scallop structure in which the interdental papillae part side is more projected on the intraoral side, considering an interdental papillae part, as illustrated in Fig. 7.

### Examples

A dental implant abutment having a shape illustrated in Fig. 1 was made from a titanium block body by a cutting machining. Then, a dental implant abutment made of titanium (Examples 1 to 3) was produced by subjecting the whole dental implant abutment to a polishing operation which was usually used in a dental field, and subjecting the dental implant abutment to electrolytic polishing and anodic oxidation treatment, while applying voltage shown in Table 1 to the dental implant abutment.

Furthermore, Comparative examples 1 and 2 of the dental implant abutments made of titanium were produced by applying different voltage and processing time from the aforementioned treatment. Comparative example 3 of a dental implant abutment made of titanium was produced by not being subjected to the treatment.

The values of L*, a* and b* represented by L*a*b* color system of these dental implant abutments made of titanium were measured by a measuring method according to JIS Z8722, 2009 and a spectral photometry device (product name: CM-700d, produced by KONICA MINOLTA HOLDINGS, INC). These results were shown in Table 1.

Furthermore, a dental hard resin (product name; GRADIA GUM, produced by GC Corporation) imitating gingiva of a patient is bonded to each hiding portion in the gingiva of the dental implant abutments made of titanium of Examples 1 to 3 and Comparative examples 1 and 2, and polymerized to become a test piece. The test piece was visually observed from the side of the dental hard resin in a human oral cavity. The effects were shown in Table 1 based on the measured results.

### Measured results;

Good: The reflected light from an abutment, which was incident to an oral cavity, sharpened gingiva.

Bad: The reflected light from an abutment, which was incident to an oral cavity, seldom sharpened gingiva.

Very Bad: Metallic color of an abutment attracted attention.

**Table 1**

| | Applied Voltage | Treating Time | L* | a* | b* | Effects |
|---|---|---|---|---|---|---|
| Example 1 | 60V | 3 min. | 43.2 | 21.2 | 10.0 | Good |
| Example 2 | 60V | 5 min. | 41.8 | 26.0 | 9.5 | Good |
| Example 3 | 65V | 3 min. | 40.2 | 37.1 | -16.5 | Good |
| Comparative example 1 | 55V | 3 min. | 56.6 | 2.9 | 45.1 | Bad |
| Comparative example 2 | 65V | 1 min. | 46.2 | 23.4 | -7.4 | Bad (There are some color irregularities) |
| Comparative example 3 | Not treated | Not treated | 52.2 | 0.4 | 2.3 | Very Bad |

## Claims

1. A dental implant abutment made of titanium mounted on the intraoral side of a dental implant fixture, said fixture being embedded in a jawbone as an artificial tooth root, penetrating through gingiva, and coming to be a base of an upper structure,
wherein a color tone represented by L*a*b* color system on the surface of the dental implant abutment made of titanium satisfies the following requirement:
L* being in the range of 40 to 44,
a* being in the range of 21 to 40, and
b* being in the range of -20 to 10.
